(19) Europäisches Patentamt
European Patent Office
Office européen des brevets

(11) **EP 4 369 289 A1**

(12) # EUROPEAN PATENT APPLICATION
published in accordance with Art. 153(4) EPC

(43) Date of publication:
**15.05.2024 Bulletin 2024/20**

(21) Application number: **21949353.3**

(22) Date of filing: **08.07.2021**

(51) International Patent Classification (IPC):
*G06T 7/00* (2017.01)

(52) Cooperative Patent Classification (CPC):
**G06T 7/00**

(86) International application number:
**PCT/JP2021/025853**

(87) International publication number:
**WO 2023/281720 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **YOSHIKAWA Shoji**
**Tokyo 100-8310 (JP)**
• **KAWAMURA Masanori**
**Tokyo 100-8310 (JP)**
• **HONDA Akihiko**
**Tokyo 100-8310 (JP)**
• **YOKOYAMA Eiji**
**Tokyo 100-8310 (JP)**

(74) Representative: **Meissner Bolte Partnerschaft mbB**
**Patentanwälte Rechtsanwälte**
**Postfach 86 06 24**
**81633 München (DE)**

(54) **IMAGE PROCESSING DEVICE, IMAGE PROCESSING METHOD, AND PROGRAM**

(57) An image processing device (1) includes a target image acquirer (101), a target index value calculator (102), a material image acquirer (111), an index value calculator (112), a cycle pattern generator (113), and a change detector (104). The target image acquirer (101) acquires a target image. The target index value calculator (102) calculates a target index value for a subregion that is a portion of the acquired target image. The material image acquirer (111) acquires material images arranged in chronological order. The index value calculator (112) calculates, in chronological order, an index value for a material subregion that is a portion of the acquired material images. The cycle pattern generator (113) generates a cycle pattern fitting a chronological change in the calculated index value. The change detector (104) calculates a correction index value that is a value in the generated cycle pattern at a capturing date and time at which the target image is captured, and determines that a change occurs in the material subregion when a difference between the target index value and the correction index value is greater than a threshold.

FIG. 2

```
                                              1
┌──────────────────────────────────────────────┐
│ IMAGE PROCESSING DEVICE                        │
│        101                    111              │
│  ┌──────────────┐      ┌──────────────┐        │
│  │ TARGET IMAGE │      │MATERIAL IMAGE│        │
│  │   ACQUIRER   │      │   ACQUIRER   │        │
│  └──────────────┘      └──────────────┘        │
│        102                    112              │
│  ┌──────────────┐      ┌──────────────┐        │
│  │ TARGET INDEX │      │ INDEX VALUE  │        │
│  │    VALUE     │      │  CALCULATOR  │        │
│  │  CALCULATOR  │      └──────────────┘        │
│  └──────────────┘             113              │
│                        ┌──────────────┐        │
│                        │CYCLE PATTERN │        │
│                        │  GENERATOR   │        │
│                        └──────────────┘        │
│                               104              │
│            ┌──────────────┐                    │
│            │   CHANGE     │                    │
│            │  DETECTOR    │                    │
│            └──────────────┘                    │
└──────────────────────────────────────────────┘
```

EP 4 369 289 A1

**Description**

Technical Field

The present disclosure relates to an image processing device, an image processing method, and a program.

Background Art

Patent Literature 1 describes a radar image processing device including a communication interface that acquires multiple pieces of radar image data of the same observation target captured at different times, a radar image holder in which the communication interface stores the data pieces, a positioning processor that reads the multiple pieces of radar image data from the radar image holder, and positions the pieces of radar image data with respect to one another, a characteristic value calculator that calculates, based on the positioned pieces of radar image data, multiple characteristic values indicating the state of the surface of the earth serving as an observation target, a potential change-area extractor that extracts a potential change area for each of the characteristic values, a distinction method determiner that determines a threshold, extraction conditions, and distinction functions, and a distinguisher that extracts a change area of an observation target from the potential change area using the determined threshold, extraction conditions, and distinction functions.

Citation List

Patent Literature

Patent Literature 1: Unexamined Japanese Patent Application Publication No. 2008-046107

Summary of Invention

Technical Problem

The radar image processing device described in Patent Literature 1 can detect a change in the surface of the earth from the difference in characteristic value indicating the state of the surface of the earth. In observation of natural terrains including rivers and seashores as few as once in several weeks, seasonal changes or tide-level changes have an effect that is not negligible. To avoid erroneous identification of such environmental changes, lenient thresholds are set for such changes, possibly causing signs of changes to be undetected.

In response to the above circumstances, an objective of the present disclosure is to provide an image processing device, an image processing method, and a program that can detect environmental changes excluding periodic changes by generating a cycle pattern reflecting periodic environmental changes.

Solution to Problem

To achieve the above objective, an image processing device according to the present disclosure includes a target image acquirer, a target index value calculator, a material image acquirer, an index value calculator, a cycle pattern generator, and a change detector. The target image acquirer acquires a target image. The target index value calculator calculates a target index value for a subregion that is a portion of the target image acquired by the target image acquirer. The material image acquirer acquires a plurality of material images arranged in chronological order. The index value calculator calculates, in chronological order, an index value for a material subregion that is a portion of the material images acquired by the material image acquirer. The cycle pattern generator generates a cycle pattern fitting a chronological change in the index value calculated by the index value calculator. The change detector calculates a correction index value that is a value in the cycle pattern generated by the cycle pattern generator at a capturing date and time at which the target image is captured, and determines that a change occurs in the material subregion when a difference between the target index value and the correction index value is greater than a threshold.

Advantageous Effects of Invention

The image processing device, the image processing method, and the program according to the present disclosure can detect environmental changes excluding periodic changes by generating a cycle pattern reflecting periodic environmental changes.

Brief Description of Drawings

FIG. 1 is a schematic diagram of an image processing device according to Embodiment 1;
FIG. 2 is a block diagram of the image processing device according to Embodiment 1;
FIG. 3 is a flowchart of a detection process performed by the image processing device according to Embodiment 1;
FIG. 4 illustrates hardware configuration of the image processing device according to Embodiment 1;
FIG. 5 is a block diagram of an image processing device according to Embodiment 2;
FIG. 6 is a flowchart of a detection process performed by the image processing device according to Embodiment 2; and
FIG. 7 illustrates hardware configuration of an image processing device according to a modification.

Description of Embodiments

Embodiment 1

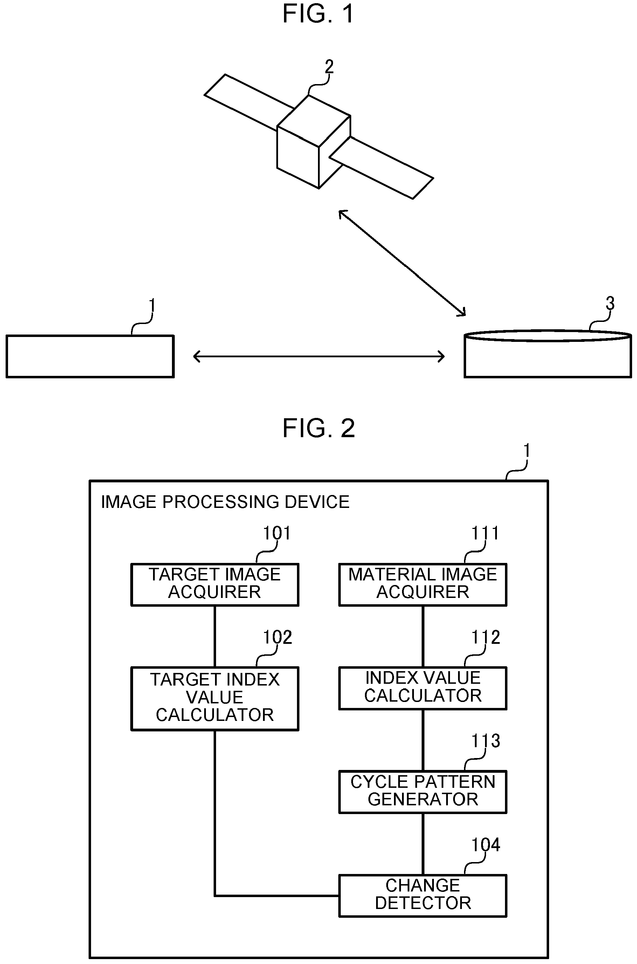

An image processing device 1 according to Embodiment 1 of the present disclosure is described with reference to FIGS. 1 to 4. The same reference signs denote the same or corresponding components in the drawings. The image processing device 1 according to the embodiment detects changes excluding periodic changes between multiple images.

FIG. 1 is a schematic diagram of the image processing device 1 according to Embodiment 1. As illustrated in FIG. 1, the image processing device 1 performs communication with an image storage 3 to acquire image data captured by an artificial satellite 2 from the image storage 3.

The artificial satellite 2 acquires radar image data or optical image data of an observation target on the surface of the earth using a radar device including a synthetic-aperture radar or an optical device including a mounted optical camera.

The image storage 3 performs communication with the artificial satellite 2, acquires and stores image data captured by the artificial satellite 2, and performs communication with the image processing device 1 to provide the image data to the image processing device 1.

FIG. 2 is a block diagram of the image processing device 1 according to Embodiment 1. As illustrated in FIG. 2, the image processing device 1 includes a target image acquirer 101 that acquires a target image P from the image storage 3, a target index value calculator 102 that calculates an index value p for a subregion of the target image P, a material image acquirer 111 that acquires a material image Ai from the image storage 3, an index value calculator 112 that calculates an index value ai for a subregion of the material image Ai, a cycle pattern generator 113 that generates a cycle pattern fa(t) that fits a change in the index value ai, and a change detector 104 that determines whether a change occurs in the subregion.

The target image acquirer 101 acquires the target image P that is a radar image from the image storage 3. The target image P is one of multiple pieces of image data that are each obtained by image capturing of the same spatial region by the artificial satellite 2 and that are arranged in chronological order. The target image P is captured at a capturing date and time tP.

The target index value calculator 102 calculates the index value p for a subregion that is a portion of the target image P acquired by the target image acquirer 101. The index value p may include, but is not limited to, a mean value of scattering intensity, a standard deviation of scattering intensity, or the sum of these values. The index value p is also referred to as a target index value.

The material image acquirer 111 acquires n (where n is any natural number) material images Ai (i = 1, 2, ..., and n) from the image storage 3. The material images Ai are included in the multiple pieces of image data, other than the target image P, that are each obtained by the image capturing of the same spatial region by the artificial satellite 2 and that are arranged in chronological order. The target images Ai are captured at a capturing date and time tAi.

The index value calculator 112 calculates the index values ai for the subregions that are portions of the material images Ai acquired by the material image acquirer 111. The subregions for which the index value calculator 112 calculates the index values ai are the same regions on the surface of the earth as the subregion for which the target index value calculator 102 calculates the index value p. The subregions for which the index value calculator 112 calculates the index values ai are also referred to as material subregions. As in the index value p, the index values ai may also include, but are not limited to, a mean value of scattering intensity, a standard deviation of scattering intensity, and the sum of these values.

The cycle pattern generator 113 generates a cycle pattern fa(t) that fits a change in the index value ai at the date and time tAi as an acquiring date and time of each material image Ai, calculated by the index value calculator 112.

The cycle pattern fa(t) is expressed by Formula 1 below, and provided by the superposition of a linear expression at a capturing date and time t and a sine wave with a single period T.

$$fa(t) = \alpha0 + \alpha1 \times t + \alpha2 \times \sin\{(2\pi/T) \times t + \alpha3\} \qquad (1)$$

In Formula 1, $\alpha0$ and $\alpha1$ are coefficients of a linear expression at the capturing date and time t, $\alpha2$ is an amplitude of the sine wave in the period T, and $\alpha3$ is an initial phase of the sine wave. The period T is the period of a change. Examples of a periodical change with the period T include a seasonal change lasting for one year, a change accompanied by the tide level lasting for 29 to 30 days, and a change between day and night lasting for 24 hours.

The cycle pattern generator 113 determines the four parameters $\alpha0$, $\alpha1$, $\alpha2$, and $\alpha3$ such that a chronological change in the index values ai matches the cycle pattern fa(t). The cycle pattern generator 113 determines the parameters using least squares fitting expressed by Formula 2 below.

$$\Sigma\{fa(tAi) - ai\}^2 \rightarrow \min (i = 1, 2, \ldots, n) \qquad (2)$$

The change detector 104 calculates, using $\alpha0$, $\alpha1$, $\alpha2$, and $\alpha3$ determined by the cycle pattern generator 113, an index value a that is a value of the cycle pattern fa(t) at the capturing date and time tP using Formula 3. The index value a is also referred to as a correction index value.

$$a = fa(tP) \qquad (3)$$

The change detector 104 compares the index value a and the index value p, and determines whether a difference between the index values a and p is greater than a threshold. The threshold is, for example, but not limited to, about several times greater than an error included in the index value and caused by an image noise, and smaller than half the double amplitude of the cycle pattern.

When determining that the difference between the index values a and p is greater than the threshold, the change detector 104 determines that a change occurs in the subregion, and outputs the detection result.

The image processing device 1 performs, on the entire region of the target image P, the above process performed on the subregion in the target image P to identify regions in the target image P with and without a change.

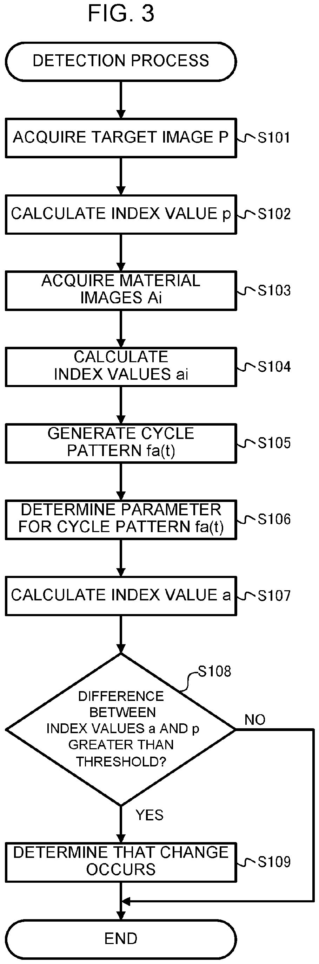

FIG. 3 is flowchart of a detection process performed by the image processing device 1 according to Embodiment 1. The detection process is described with reference to the flowchart in FIG. 3.

When the detection process starts, the target image acquirer 101 in the image processing device 1 acquires the target image P from the image storage 3 (step S101).

After the target image acquirer 101 acquires the target image P, the target index value calculator 102 calculates the index value p for the subregion that is a portion of the target image P acquired by the target image acquirer 101 (step S 102).

After the target index value calculator 102 calculates the index value p, the material image acquirer 111 acquires n material images Ai from the image storage 3 (step S103).

After the material image acquirer 111 acquires the material images Ai, the index value calculator 112 calculates the index values ai for the subregions that are portions of the material images Ai acquired by the material image acquirer 111 (step S104).

After the index value calculator 112 calculates the index values ai, the cycle pattern generator 113 generates the cycle pattern fa(t) that fits a change in the index value ai at the date and time tAi as the acquiring date and time of each material image Ai, calculated by the index value calculator 112 (step S105).

After generating the cycle pattern fa(t), the cycle pattern generator 113 determines a parameter for fa(t) such that the chronological change in the index values ai matches the cycle pattern fa(t) (step S106).

After the cycle pattern generator 113 determines the parameter for the cycle pattern fa(t), the change detector 104 calculates the index value a that is a value of the cycle pattern fa(t) at the capturing date and time tP using the parameter determined by the cycle pattern generator 113 (step S107).

After calculating the index value a, the change detector 104 compares the index value a and the index value p to determine whether the difference between the index values a and p is greater than the threshold (step S108). When determining that the difference between the index values a and p is not greater than the threshold (NO in step S108), the change detector 104 ends the detection process.

When determining that the difference between the index values a and p is greater than the threshold (YES in step S108), the change detector 104 determines that a change occurs in the subregion (step S109), outputs the detection result, and ends the detection process.

Through the detection process on the entire region of the target image P, the image processing device 1 identifies regions in the target image P with and without a change.

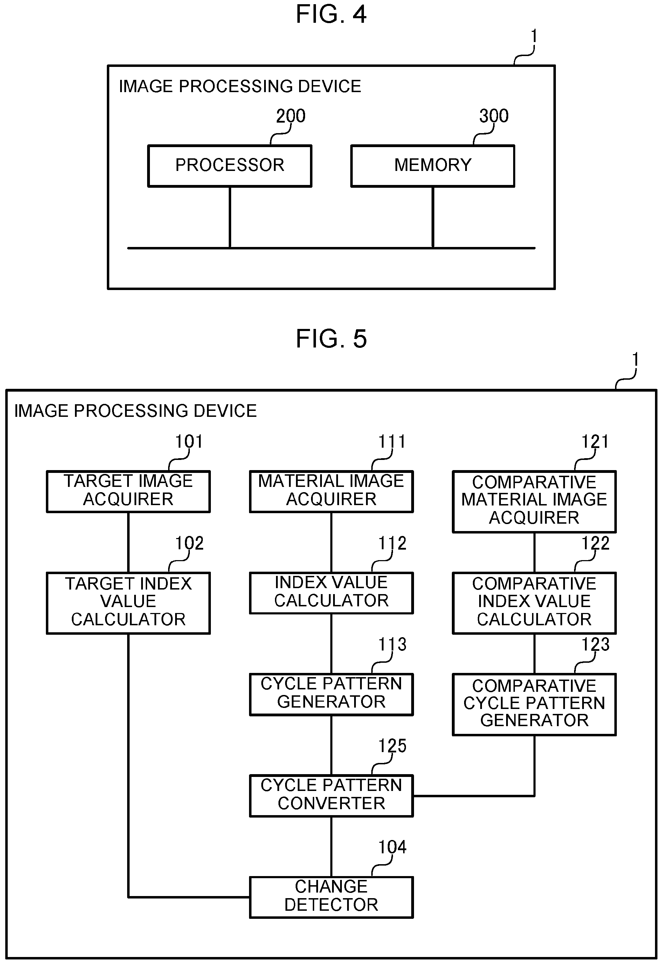

The hardware configuration of the image processing device 1 is described. FIG. 4 illustrates hardware configuration of the image processing device 1. As illustrated in FIG. 4, the image processing device 1 includes a processor 200 and a memory 300 connected to each other with a bus.

The processor 200 performs the detection process by executing a program stored in the memory 300. The processor 200 may include a central processing unit (CPU), a central processing device, a processing device, an arithmetic unit, a microprocessor, a microcomputer, a processor, a digital signal processor (DSP), or a system large scale integration (LSI) circuit.

The memory 300 stores the program executed by the processor 200 and obstruction information, target shape information, or deformation information. The memory 300 also functions as a temporary memory used by the processor 200 to perform a process. The memory 300 may include a nonvolatile or volatile semiconductor memory, such as a random-access memory (RAM), a read-only memory (ROM), a flash memory, an erasable programmable ROM (EPROM), or an electrically erasable programmable ROM (EEPROM, registered trademark), a magnetic disk, a flexible disk, an optical disk, a compact disc, a minidisc, or a digital versatile disc (DVD).

Through the detection process, the image processing device 1 according to Embodiment 1 with the above structure can generate a cycle pattern reflecting the periodic environmental changes and detect environmental changes excluding the periodic changes.

The effects of periodic environmental factors, including the seasons dependent on the direction of the sun and the tide level dependent on the direction of the moon, typically have positive and negative peaks at substantially the same magnitude, have time periods longer and shorter than the average with substantially the same length, and change smoothly. The elementary function of these features is expressed in a sine wave. When the cycle pattern fa(t) is provided by the superposition of a linear expression at the capturing date and time t and a sine wave with a single period T as expressed with Formula 1, the image processing device 1 can reflect the periodic environmental changes on the cycle pattern fa(t). Thus, the image processing device 1 can detect environmental changes while eliminating the effects of the periodic environmental changes, and thus can detect a long-term decrease or increase.

The image processing device 1 can detect an environmental change in a time scale shorter than the period T through the detection process. The image processing device 1 can detect a sign of a change, such as a decrease or an increase in the amount of sand at the seashore or the riverbank preserving the sand. The user determining that a field survey is to be conducted can immediately conduct the survey and respond to the change before the change affects the environment seriously.

For the sign of the coefficient $\alpha 1$ of a linear expression in the cycle pattern fa(t) determined by the image processing device 1, a positive $\alpha 1$ indicates an increase in a time scale longer than the period T, and $\alpha 1$ indicates a decrease in a time scale longer than the period T. The image processing device 1 can determine a long-term trend, such as accumulation or loss of sand at the seashore or the riverbank preserving the sand, and contribute to a shore preservation project.

Embodiment 2

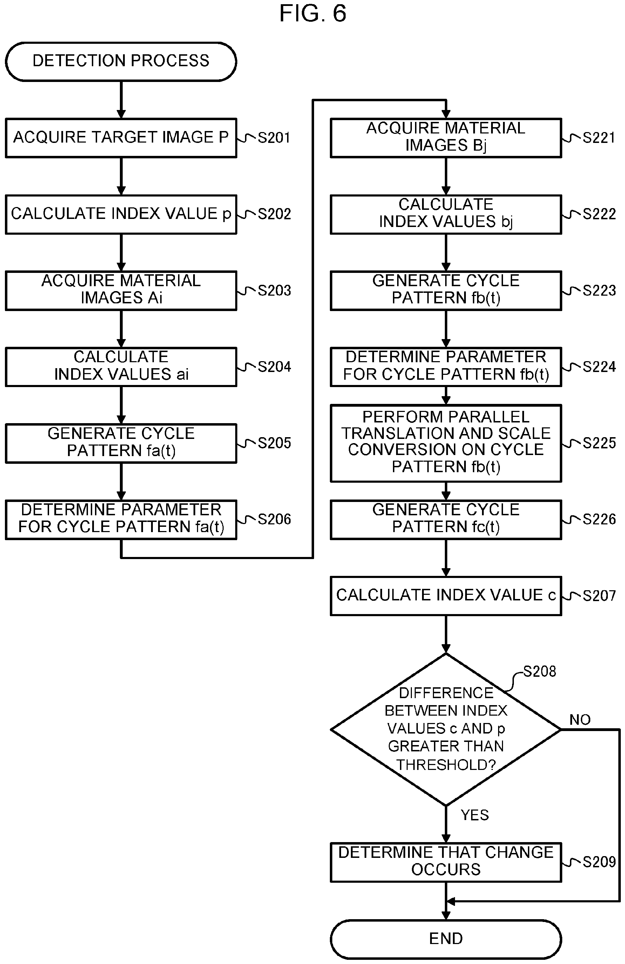

An image processing device 1 according to Embodiment 2 of the present disclosure is described with reference to FIGS. 5 and 6.

FIG. 5 is a block diagram of the image processing device 1 according to Embodiment 2. As illustrated in FIG. 5, the image processing device 1 includes, in addition to the components of the image processing device 1 according to Embodiment 1, a comparative material image acquirer 121 that acquires material images Bj, a comparative index value calculator 122 that calculates index values bj for the subregions of the material images Bj, a comparative cycle pattern generator 123 that generates a cycle pattern fb(t) that fits a change in the index values bj, and a cycle pattern converter 125 that generates a cycle pattern fc(t) that fits a change between the index values ai and the index values bj resulting from the conversion.

The comparative material image acquirer 121 acquires m (where m is any natural number) material images Bj (j=1, 2, ..., and m). The material images Bj are portions of images different from the material images Ai. The material images bj are captured at a capturing date and time tBj.

The material images Ai and Bj may be, for example, but not limited to, images captured by a single artificial satellite 2 in different orbits while travelling from the south to the north and while travelling from the north to the south, captured by observation devices of the same type mounted on different artificial satellites 2, captured in different frequency bands including an S band, an L band, a C band, and an X band, or captured by different pieces of observation means including a radar satellite and an optical satellite.

The comparative index value calculator 122 calculates the index values bj for the subregions that are portions of the material images Bj acquired by the comparative material image acquirer 121. The subregion for which the comparative index value calculator 122 calculates the index values bj is the same region on the surface of the earth as the subregion for which the target index value calculator 102 calculates the index value p. The subregions for which the comparative index value calculator 122 calculates the index values bj are also referred to as comparative material subregions. As in the index value p, the index values bj may include, but are not limited to, a mean value of scattering intensity, a standard deviation of scattering intensity, or the sum of these values. The index values bj are also referred to as comparative index values.

The comparative cycle pattern generator 123 generates the cycle pattern fb(t) that fits a change in the index value bj at the date and time tBj as an acquiring date and time of each material image Bj, calculated by the comparative index value calculator 122. The cycle pattern fb(t) is also referred to as a comparative cycle pattern.

The cycle pattern fb(t) is expressed by Formula 1' below and is provided by the superposition of a linear expression at the capturing date and time t and a sine wave with a single period T.

$$fb(t) = \beta 0 + \beta 1 \times t + \beta 2 \times \sin\{(2\pi/T) \times t + \beta 3\} \qquad (1')$$

In Formula 1', $\beta 0$ and $\beta 1$ are coefficients of a linear expression at the capturing date and time t, $\beta 2$ is an amplitude of the sine wave in the period T, and $\beta 3$ is an initial phase of the sine wave.

The comparative cycle pattern generator 123 determines four parameters $\beta 0$, $\beta 1$, $\beta 2$, and $\beta 3$ such that a chronological change in the index values bj matches the cycle pattern fb(t). The comparative cycle pattern generator 123 determines the parameters using least squares fitting expressed by Formula 2' below.

$$\Sigma\{fb(tBj) - bj\}^\wedge 2 \to \min (j = 1, 2, \ldots, m) \qquad (2')$$

The cycle pattern converter 125 performs parallel translation and scale conversion on the cycle pattern fb(t) to cause the mean, the amplitude, and the phase of each of the cycle patterns fa(t) and fb(t) to match. The cycle pattern converter 125 converts the cycle pattern fb(t) using least squares fitting expressed by Formula 4 below.

$$\Sigma[fa(tBj) - s \times \{fb(tBj) + d\}]^\wedge 2 \to \min (j = 1, 2, \ldots, m) \qquad (4)$$

In Formula 4, d is an amount of parallel translation, and s is a value of scale conversion.

The cycle pattern converter 125 converts each index value bj with $s \times bj + d$ using the determined values d and s and generates the cycle pattern fc(t) that fits the resulting index value bj and the index value ai. The cycle pattern converter 125 generates the cycle pattern fc(t) using least squares fitting expressed by Formula 5 below. The cycle pattern fc(t) is also referred to as an integrated cycle pattern.

$$\Sigma\{fc(tAi) - ai\}^\wedge 2 + \Sigma\{fc(tBj) - (s \times bj + d)\}^\wedge 2 \to \min (i = 1, 2, \ldots, n, j = 1,$$

$$2, \ldots, m) \qquad (5)$$

The change detector 104 calculates an index value c that is a value of the cycle pattern fc(t) at the capturing date and time tP using the cycle pattern fc(t) calculated by the cycle pattern converter 125 with Formula 3' below.

$$c = fc(tP) \qquad (3')$$

The change detector 104 compares the index value c and the index value p to determine whether the difference between the index values c and p is greater than the threshold. When determining that the difference between the index values c and p is greater than the threshold, the change detector 104 determines that a change occurs in the subregion, and outputs the detection result.

The image processing device 1 performs, on the entire region of the target image P, the above process performed on the subregion in the target image P to identify regions in the target image P with and without a change.

FIG. 6 is a flowchart of a detection process performed by the image processing device 1 according to Embodiment 2. The detection process is described with reference to the flowchart in FIG. 6.

When the detection process starts, the target image acquirer 101 in the image processing device 1 acquires the target image P from the image storage 3 (step S201).

After the target image acquirer 101 acquires the target image P, the target index value calculator 102 calculates the index value p for the subregion that is a portion of the target image P acquired by the target image acquirer 101 (step S202).

After the target index value calculator 102 calculates the index value p, the material image acquirer 111 acquires n material images Ai from the image storage 3 (step S203).

After the material image acquirer 111 acquires the material images Ai, the index value calculator 112 calculates the index values ai for the subregions that are portions of the material images Ai acquired by the material image acquirer 111 (step S204).

After the index value calculator 112 calculates the index values ai, the cycle pattern generator 113 generates the cycle pattern fa(t) that fits a change in the index value ai at the date and time tAi as the acquiring date and time of each material image Ai, calculated by the index value calculator 112 (step S205).

After generating the cycle pattern fa(t), the cycle pattern generator 113 determines the parameter for the cycle pattern fa(t) such that the chronological change in the index values ai matches the cycle pattern fa(t) (step S206).

After the cycle pattern generator 113 determines the parameter for the cycle pattern fa(t), the comparative material image acquirer 121 acquires m material images Bj (step S221).

After the comparative material image acquirer 121 acquires the material images Bj, the comparative index value calculator 122 calculates the index values bj for the subregions that are portions of the material images Bj acquired by the comparative material image acquirer 121 (step S222).

After the comparative index value calculator 122 calculates the index values bj, the comparative cycle pattern generator 123 generates the cycle pattern fb(t) that fits a change in the index values bj calculated by the comparative index value calculator 122 (step S223).

After generating the cycle pattern fb(t), the comparative cycle pattern generator 123 determines the parameter for the cycle pattern fb(t) such that a chronological change in the index values bj matches the cycle pattern fb(t) (step S224).

After the comparative cycle pattern generator 123 determines the parameter for the cycle pattern fb(t), the cycle pattern converter 125 performs parallel translation and scale conversion on the cycle pattern fb(t) to cause the mean, the amplitude, and the phase of each of the cycle patterns fa(t) and fb(t) to match (step S225).

After parallel translation and scale conversion on the cycle pattern fb(t), the cycle pattern converter 125 converts the index values bj and generates the cycle pattern fc(t) that fits the resulting index values bj and the index values ai (step S226).

After the cycle pattern converter 125 generates the cycle pattern fc(t), the change detector 104 calculates the index value c that is a value of the cycle pattern fc(t) at the capturing date and time tP using the cycle pattern fc(t) calculated by the cycle pattern converter 125 (step S207).

After calculating the index value c, the change detector 104 compares the index value c and the index value p to determine whether the difference between the index values c and p is greater than the threshold (step S208). When determining that the difference between the index values c and p is not greater than the threshold (NO in step S208), the change detector 104 ends the detection process.

When determining that the difference between the index values c and p is greater than the threshold (YES in step S208), the change detector 104 determines that a change occurs in the subregion (step S209), outputs the detection result, and ends the detection process.

Through the detection process, the image processing device 1 according to Embodiment 2 with the above structure produces the same effects as the image processing device 1 according to Embodiment 1.

The image processing device 1 according to Embodiment 2 performs parallel translation and scale conversion on cycle patterns generated from two different material images to cause one of the cycle patterns to match the other cycle pattern and generates a new cycle pattern from the two cycle patterns to allow use of multiple data sets for effectively improving the observation frequency.

Modifications

The image processing device 1 acquires image data captured by the artificial satellite 2, but this is not limitative. The image processing device 1 may acquire image data captured by a radar observation device or an optical observation device mounted on an aircraft, a drone, or a balloon or captured by a radar observation device or an optical observation device installed on the ground.

The target image P is a radar image, but this is not limitative. The target image P may be an optical image. In this case, the index value p may include a mean value of luminance, a standard deviation of luminance, or the sum of these values.

The index value p may include a mean value of scattering intensity, a standard deviation of scattering intensity, or the sum of these values, but this is not limitative. Instead of using a quantity having a dimension as the index value p, a dimensionless quantity acquired from the ratio of a mean value of scattering intensity or a standard deviation of scattering intensity to the entire image may be used as the index value p. The same applies to the index values a, c, ai, and bj.

The target image acquirer 101 acquires the target image P, the target index value calculator 102 calculates the index value p, the material image acquirer 111 acquires the material images Ai, and then the index value calculator 112 calculates the index values ai. However, this is not limitative. The target index value calculator 102 may calculate the index value p after the index value calculator 112 calculates the index values ai, or calculation of the index value p and calculation of the index values ai may be performed in parallel. The same applies to calculation of the index value b.

The cycle pattern fa(t) is provided by the superposition of a linear expression at the capturing date and time t and a sine wave with a single period T, but this is not limitative. The cycle pattern fa(t) may be provided by the superposition of a higher-order expression at the capturing date and time t and a sine wave of multiple periods. The same applies to the cycle patterns fb(t) and fc(t).

The cycle pattern generator 113 determines the parameters using least squares fitting expressed by Formula 2, but this is not limitative. The parameters may be determined sequentially from a lower-order term or a sine wave with a longer period T, and the residuals may be fitted with the parameters for a high-order term or a sine wave with a shorter period T.

A sine wave is used to serve as a periodic function for the cycle pattern fa(t), but this is not limitative. Other periodic functions including a triangle wave and a square wave may be used. The same applies to the cycle patterns fb(t) and fc(t).

The image processing device 1 performs the detection process on the entire region of the target image P, but this is not limitative. The image processing device 1 may perform the detection process on a portion of the target image P alone. The image processing device 1 may focus the detection region on, for example, a seashore or a riverbank using geographic information on the target on the surface of the earth. The image processing device 1 may identify regions that are to have no human-caused change including parks and regions that are to have human-caused changes including mines and calculate the index values independently.

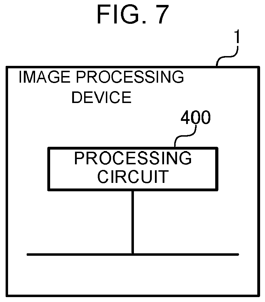

The image processing device 1 includes the processor 200 and the memory 300, but this is not limitative. FIG. 7 illustrates hardware configuration of the image processing device 1. As illustrated in FIG. 7, the image processing device 1 may include a processing circuit 400 that is a single circuit, a complex circuit, a programmed processor, a parallel-programmed processor, an application specific integrated circuit (ASIC), a field-programmable gate array (FPGA), or a combination of two or more of these.

Means and a method for performing various processes of the image processing device according to Embodiments 1 and 2 are also implementable by a dedicated hardware circuit or a programmed computer. The above program may be provided by a non-transitory computer-readable recording medium including a flexible disk or a compact disc ROM (CD-ROM) or provided on-line through a network including the Internet. In this case, the program recorded in the non-transitory computer-readable recording medium is typically transmitted to a storage including a hard disk and stored into the storage. The program may be provided as a single piece of application software or incorporated in software of an apparatus to serve as a function of the apparatus.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

Industrial Applicability

One or more embodiments of the present disclosure is usable for an image processing device, an image processing method, and a program.

Reference Signs List

1     Image processing device
2     Artificial satellite
3     Image storage
101   Target image acquirer
102   Target index value calculator
104   Change detector
111   Material image acquirer

112      Index value calculator
113      Cycle pattern generator
121      Comparative material image acquirer
122      Comparative index value calculator
123      Comparative cycle pattern generator
125      Cycle pattern converter
200      Processor
300      Memory
400      Processing circuit

**Claims**

1. An image processing device, comprising:

    a target image acquirer to acquire a target image;
    a target index value calculator to calculate a target index value for a subregion that is a portion of the target image acquired by the target image acquirer;
    a material image acquirer to acquire a plurality of material images arranged in chronological order;
    an index value calculator to calculate, in chronological order, an index value for a material subregion that is a portion of each of the plurality of material images acquired by the material image acquirer;
    a cycle pattern generator to generate a cycle pattern fitting a chronological change in the index value calculated by the index value calculator; and
    a change detector to calculate a correction index value that is a value in the cycle pattern generated by the cycle pattern generator at a capturing date and time at which the target image is captured, and determine that a change occurs in the material subregion when a difference between the target index value and the correction index value is greater than a threshold.

2. The image processing device according to claim 1, wherein

    the target image is one of a plurality of pieces of image data that are each obtained by image capturing of a same spatial region and that are arranged in chronological order, and
    the plurality of material images are included in the plurality of pieces of image data, other than the target image, that are each obtained by the image capturing of the same spatial region and that are arranged in chronological order.

3. The image processing device according to claim 1 or 2, wherein the target index value includes at least one of a mean value of scattering intensity of the target image, a standard deviation of the scattering intensity, a mean value of luminance of the target image, or a standard deviation of the luminance.

4. The image processing device according to any one of claims 1 to 3, wherein the cycle pattern generator generates the cycle pattern expressed by superposition of a linear expression of time and a sine wave.

5. The image processing device according to any one of claims 1 to 4, wherein the cycle pattern generator determines a parameter for the cycle pattern by least squares fitting.

6. An image processing device, comprising:

    a target image acquirer to acquire a target image;
    a target index value calculator to calculate a target index value for a subregion that is a portion of the target image acquired by the target image acquirer;
    a material image acquirer to acquire a plurality of material images arranged in chronological order;
    an index value calculator to calculate, in chronological order, an index value for a material subregion that is a portion of each of the plurality of material images acquired by the material image acquirer;
    a cycle pattern generator to generate a cycle pattern fitting a chronological change in the index value calculated by the index value calculator;
    a comparative material image acquirer to acquire a plurality of comparative material images arranged in chronological order;

a comparative index value calculator to calculate, in chronological order, a comparative index value for a comparative material subregion that is a portion of each of the plurality of comparative material images acquired by the comparative material image acquirer;

a comparative cycle pattern generator to generate a comparative cycle pattern fitting a chronological change in the comparative index value calculated by the comparative index value calculator;

a cycle pattern converter to convert the comparative cycle pattern generated by the comparative cycle pattern generator, and generate an integrated cycle pattern from the comparative cycle pattern resulting from the conversion and the cycle pattern; and

a change detector to calculate an integrated correction index value that is a value in the integrated cycle pattern generated by the cycle pattern converter at a capturing date and time at which the target image is captured, and determine that a change occurs in the comparative material subregion when a difference between the target index value and the integrated correction index value is greater than a threshold.

7. An image processing method, comprising:

acquiring a target image;
calculating a target index value for a subregion that is a portion of the acquired target image;
acquiring a plurality of material images arranged in chronological order;
calculating, in chronological order, an index value for a material subregion that is a portion of each of the acquired plurality of material images;
generating a cycle pattern fitting a chronological change in the calculated index value; and
calculating a correction index value that is a value in the generated cycle pattern at a capturing date and time at which the target image is captured, and determining that a change occurs in the material subregion when a difference between the target index value and the correction index value is greater than a threshold.

8. An image processing method, comprising:

acquiring a target image;
calculating a target index value for a subregion that is a portion of the acquired target image;
acquiring a plurality of material images arranged in chronological order;
calculating, in chronological order, an index value for a material subregion that is a portion of each of the acquired plurality of material images;
generating a cycle pattern fitting a chronological change in the calculated index value;
acquiring a plurality of comparative material images arranged in chronological order;
calculating, in chronological order, a comparative index value for a comparative material subregion that is a portion of each of the acquired plurality of comparative material images;
generating a comparative cycle pattern fitting a chronological change in the calculated comparative index value;
converting the generated comparative cycle pattern, and generating an integrated cycle pattern from the comparative cycle pattern resulting from the conversion and the cycle pattern; and
calculating an integrated correction index value that is a value in the generated integrated cycle pattern at a capturing date and time at which the target image is captured, and determining that a change occurs in the comparative material subregion when a difference between the target index value and the integrated correction index value is greater than a threshold.

9. A program for causing a computer to perform operations comprising:

acquiring a target image;
calculating a target index value for a subregion that is a portion of the acquired target image;
acquiring a plurality of material images arranged in chronological order;
calculating, in chronological order, an index value for a material subregion that is a portion of each of the acquired plurality of material images;
generating a cycle pattern fitting a chronological change in the calculated index value; and
calculating a correction index value that is a value in the generated cycle pattern at a capturing date and time at which the target image is captured, and determining that a change occurs in the material subregion when a difference between the target index value and the correction index value is greater than a threshold.

10. A program for causing a computer to perform operations comprising:

acquiring a target image;

calculating a target index value for a subregion that is a portion of the acquired target image;

acquiring a plurality of material images arranged in chronological order;

calculating, in chronological order, an index value for a material subregion that is a portion of each of the acquired plurality of material images;

generating a cycle pattern fitting a chronological change in the calculated index value;

acquiring a plurality of comparative material images arranged in chronological order;

calculating, in chronological order, a comparative index value for a comparative material subregion that is a portion of each of the acquired plurality of comparative material images;

generating a comparative cycle pattern fitting a chronological change in the calculated comparative index value;

converting the generated comparative cycle pattern, and generating an integrated cycle pattern from the comparative cycle pattern resulting from the conversion and the cycle pattern; and

calculating an integrated correction index value that is a value in the generated integrated cycle pattern at a capturing date and time at which the target image is captured, and determining that a change occurs in the comparative material subregion when a difference between the target index value and the integrated correction index value is greater than a threshold.

# FIG. 1

# FIG. 2

IMAGE PROCESSING DEVICE

| | |
|---|---|
| 101 | 111 |
| TARGET IMAGE ACQUIRER | MATERIAL IMAGE ACQUIRER |
| 102 | 112 |
| TARGET INDEX VALUE CALCULATOR | INDEX VALUE CALCULATOR |
| | 113 |
| | CYCLE PATTERN GENERATOR |
| | 104 |
| | CHANGE DETECTOR |

# FIG. 3

```
        ┌─────────────────────────┐
        │    DETECTION PROCESS     │
        └─────────────────────────┘
                     │
                     ▼
        ┌─────────────────────────┐
        │  ACQUIRE TARGET IMAGE P  │──S101
        └─────────────────────────┘
                     │
                     ▼
        ┌─────────────────────────┐
        │  CALCULATE INDEX VALUE p │──S102
        └─────────────────────────┘
                     │
                     ▼
        ┌─────────────────────────┐
        │    ACQUIRE MATERIAL      │──S103
        │       IMAGES Ai          │
        └─────────────────────────┘
                     │
                     ▼
        ┌─────────────────────────┐
        │       CALCULATE          │──S104
        │     INDEX VALUES ai      │
        └─────────────────────────┘
                     │
                     ▼
        ┌─────────────────────────┐
        │     GENERATE CYCLE       │──S105
        │     PATTERN fa(t)        │
        └─────────────────────────┘
                     │
                     ▼
        ┌─────────────────────────┐
        │  DETERMINE PARAMETER     │──S106
        │  FOR CYCLE PATTERN fa(t) │
        └─────────────────────────┘
                     │
                     ▼
        ┌─────────────────────────┐
        │  CALCULATE INDEX VALUE a │──S107
        └─────────────────────────┘
                     │
                     ▼
                  ╱─────╲  S108
                 ╱ DIFFER-╲
                ╱  ENCE    ╲
               ╱ BETWEEN    ╲   NO
              ╱ INDEX VALUES ╲─────────┐
              ╲ a AND p       ╱        │
               ╲GREATER THAN ╱         │
                ╲THRESHOLD? ╱          │
                  ╲───────╱            │
                     │ YES             │
                     ▼                 │
        ┌─────────────────────────┐    │
        │ DETERMINE THAT CHANGE    │──S109
        │       OCCURS             │    │
        └─────────────────────────┘    │
                     │                 │
                     ▼◄────────────────┘
        ┌─────────────────────────┐
        │          END             │
        └─────────────────────────┘
```

# FIG. 4

IMAGE PROCESSING DEVICE — 1

| | |
|---|---|
| PROCESSOR — 200 | MEMORY — 300 |

# FIG. 5

IMAGE PROCESSING DEVICE — 1

TARGET IMAGE ACQUIRER — 101

MATERIAL IMAGE ACQUIRER — 111

COMPARATIVE MATERIAL IMAGE ACQUIRER — 121

TARGET INDEX VALUE CALCULATOR — 102

INDEX VALUE CALCULATOR — 112

COMPARATIVE INDEX VALUE CALCULATOR — 122

CYCLE PATTERN GENERATOR — 113

COMPARATIVE CYCLE PATTERN GENERATOR — 123

CYCLE PATTERN CONVERTER — 125

CHANGE DETECTOR — 104

# FIG. 6

DETECTION PROCESS

ACQUIRE TARGET IMAGE P — S201

CALCULATE INDEX VALUE p — S202

ACQUIRE MATERIAL IMAGES Ai — S203

CALCULATE INDEX VALUES ai — S204

GENERATE CYCLE PATTERN fa(t) — S205

DETERMINE PARAMETER FOR CYCLE PATTERN fa(t) — S206

ACQUIRE MATERIAL IMAGES Bj — S221

CALCULATE INDEX VALUES bj — S222

GENERATE CYCLE PATTERN fb(t) — S223

DETERMINE PARAMETER FOR CYCLE PATTERN fb(t) — S224

PERFORM PARALLEL TRANSLATION AND SCALE CONVERSION ON CYCLE PATTERN fb(t) — S225

GENERATE CYCLE PATTERN fc(t) — S226

CALCULATE INDEX VALUE c — S207

DIFFERENCE BETWEEN INDEX VALUES c AND p GREATER THAN THRESHOLD? — S208

NO

YES

DETERMINE THAT CHANGE OCCURS — S209

END

# FIG. 7

IMAGE PROCESSING DEVICE

1

400

PROCESSING CIRCUIT

## INTERNATIONAL SEARCH REPORT

| International application No. |
|---|
| PCT/JP2021/025853 |

A.  CLASSIFICATION OF SUBJECT MATTER
G06T 7/00(2017.01)i
FI: G06T7/00 640

According to International Patent Classification (IPC) or to both national classification and IPC

B.  FIELDS SEARCHED

Minimum documentation searched (classification system followed by classification symbols)
G06T7/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2015-26369 A (PASCO CORP) 05 February 2015 (2015-02-05) paragraphs [0072]-[0081], fig. 11 | 1-10 |
| A | JP 2008-107941 A (MITSUBISHI ELECTRIC CORP) 08 May 2008 (2008-05-08) paragraphs [0063]-[0066] | 1-10 |
| A | WO 2008/016153 A1 (PASCO CORPORATION) 07 February 2008 (2008-02-07) paragraph [0043] | 1-10 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 September 2021 (14.09.2021) | 21 September 2021 (21.09.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

International application No.

PCT/JP2021/025853

| Patent Documents referred in the Report | Publication Date | Patent Family | Publication Date |
|---|---|---|---|
| JP 2015-26369 A | 05 Feb. 2015 | (Family: none) | |
| JP 2008-107941 A | 08 May 2008 | (Family: none) | |
| WO 2008/016153 A1 | 07 Feb. 2008 | US 2009/0256741 A1 paragraph [0049] EP 2053423 A1 CN 101501524 A | |

Form PCT/ISA/210 (patent family annex) (January 2015)

**EP 4 369 289 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008046107 A